# EUROPÄISCHE PATENTSCHRIFT

(11) **EP 1 219 841 B1**
(45) Veröffentlichungstag und Bekanntmachung des Hinweises auf die Patenterteilung: **05.11.2003**
(21) Anmeldenummer: 02005608.1
(22) Anmeldetag: 30.09.1996
(51) Int. Cl.: F16C 33/10, F01C 21/02

(54) **Gleitlager, insbesondere für eine Zahnradpumpe**
Slide bearing,especially for a gear pump
Palier lisse,notamment pour une pompe à engrenages

(43) Veröffentlichungstag der Anmeldung: 03.07.2002
(62) Teilanmeldung aus: 96115639.5
(73) Patentinhaber: Maag Pump Systems Textron AG, 8023 Zürich (CH)
(72) Erfinder: Blume, Peter, 8057 Zürich (CH); Seekirchner, Gregor, 8405 Winterthur (CH)
(74) Vertreter: Troesch Scheidegger Werner AG

(56) Entgegenhaltungen:
- EP-A- 0 559 582
- EP-A- 0 620 368
- DE-A- 2 005 740
- DE-C- 832 968
- GB-A- 1 275 252

## Beschreibung

Die vorliegende Erfindung betrifft ein Gleitlager nach dem Oberbegriff des Patentanspruchs 1 sowie eine Zahnradpumpe mit einem derartigen Gleitlager.

Bekanntermassen werden Gleitlager für Zahnradpumpen oft durch das geförderte Medium geschmiert, denn es kann davon ausgegangen werden, dass aufgrund der Exzentrizität der Welle im Gleitlager, welche zu einer erhöhten Spaltbreite auf der Nichtlastseite des Gleitlagers führt, und aufgrund eines über dem Gleitlager anliegenden Differenzdruckes der Zutritt des Fördergutes in das Gleitlager gewährleistet ist und somit die im Gleitlager geführte Welle ausreichend geschmiert wird.

Für höherviskos fliessendes Fluid kann der Zutritt ins Gleitlager und die Verteilung über die Lagerbreite durch eine Schmiernut erleichtert werden, wie dies beispielsweise in EP-0 620 368 beschrieben wurde.

Aus der DE-832 968 ist des Weiteren ein Gleitlager der eingangs genannten Art bekannt, das Schmiernuten aufweist, wobei sowohl Nuten zum Zuführen von Schmiermittel als auch Nuten zum Ableiten von gebrauchtem Schmiermittel vorgesehen sind. Darüber hinaus offenbart diese Druckschrift, dass die Schmiernuten über den ganzen Lagerbereich eine konstante Querschnittsfläche aufweisen.

Fluide mit unbekanntem elastischem Verhalten weisen oft den Nachteil auf, dass der Fluiddruck in der Schmiernut ungenügend ist, damit die Schmierflüssigkeit, d.h. das Fördergut, in den Spalt zwischen Gleitlager und Welle eingezogen wird.

Der vorliegenden Erfindung liegt daher die Aufgabe zugrunde, ein Gleitlager anzugeben, bei dem eine genügende Schmierung, insbesondere auch bei einem höherviskos fliessenden Fluid, gewährleistet ist.

Diese Aufgabe wird durch die im kennzeichnenden Teil des Patentanspruchs 1 angegebenen Massnahmen gelöst. Vorteilhafte Ausgestaltungen der Erfindung sowie eine Zahnradpumpe sind in weiteren Ansprüchen angegeben.

Die Erfindung weist folgende Vorteile auf: Indem eine Querschnittfläche der Schmiernut (HN, UN) auf der zahnradseitig einbaubaren Seite am grössten ist und indem die Querschnittfläche, ausgehend von der zahnradseitig einbaubaren Seite, in Richtung dichtungsseitig einbaubaren Seite, zumindest bis zum Ende der Schmiernut (HN, UN) oder bis zum Ende des Gleitlagers (GL), stetig abnimmt, wird das Schmiermittel gezwungen, unmittelbar und vermehrt in den Schlitz zwischen Gleitlager und Welle zu gelangen. Dies ist allgemein, insbesondere bei cellulosehaltigen Fördermedien, von grossem Vorteil.

Die Erfindung wird nachfolgend anhand von Zeichnungen beispielsweise näher erläutert. Dabei zeigt
- Fig. 1: eine Abwicklung eines erfindungsgemässen Gleitlagers und
- Fig. 2: einen Schnitt durch die Lagerbohrung des erfindungsgemässen Gleitlagers.

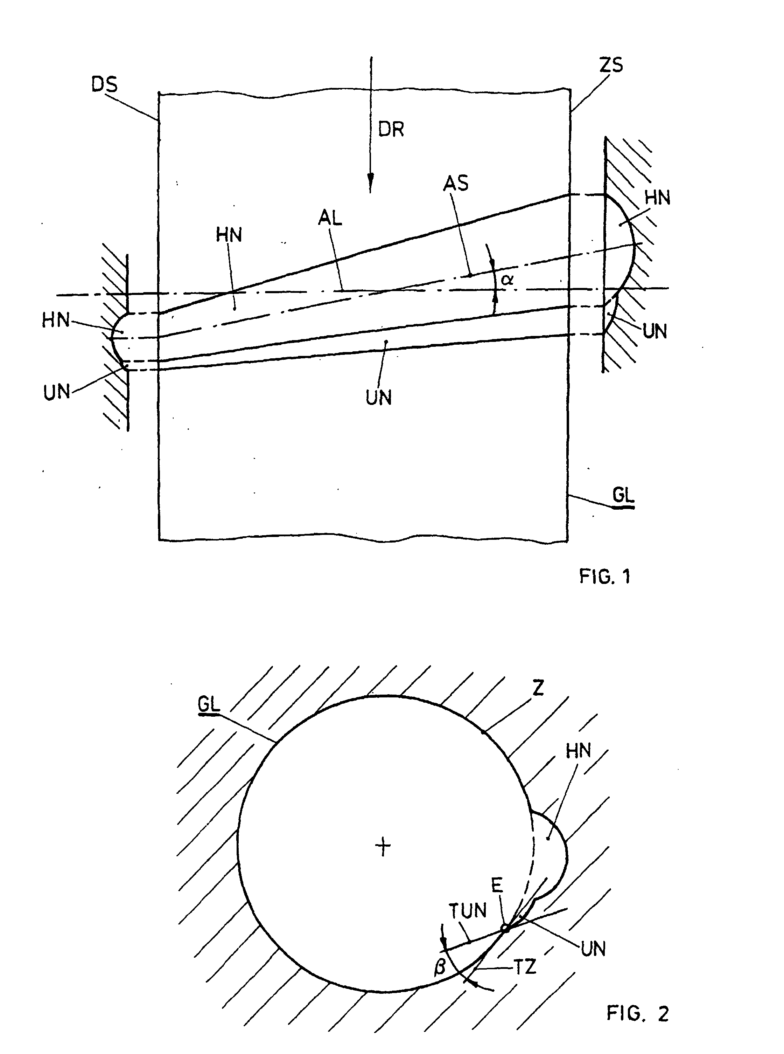

In Fig. 1 ist ein erfindungsgemässes Gleitlager GL abgewickelt auf einer Ebene dargestellt, wobei seitlich zwei Seitenansichten des Gleitlagers GL gezeigt sind. In die Oberfläche des Gleitlagers GL ist eine Ausnehmung in Form einer Nut, insbesondere - wie in Fig. 1 dargestellt - ausgebildet als Hauptnut HN und Übergangsnut UN, wobei die Hauptnut HN und die Übergangsnut UN ineinander laufend ausgebildet sind und wobei die Hauptnut HN grösser ist als die Übergangsnut UN. Ferner weisen die Hauptnut HN und die Übergangsnut UN auf der Zahnradseite ZS grössere Tiefen auf als auf der entsprechenden Dichtungsseite DS und, wie in Fig. 1 ersichtlich, erfolgt der Übergang von der maximalen zur minimalen Tiefe stetig. Wie der eben erwähnte stetige Übergang in Bezug auf die Nuttiefen erfolgt in gleicher Weise auch ein stetiger Übergang in Bezug auf die Änderung der Nutbreiten. Demzufolge ändert sich die Querschnittsfläche gebildet durch die Hauptnut HN und die Übergangsnut UN ebenfalls stetig, und zwar wird die Querschnittfläche ausgehend von der Zahnradseite ZS in Richtung Dichtungsseite DS stetig kleiner.

Wie in Fig. 1 dargestellt und als bevorzugte Ausführungsform der Erfindung angegeben, schliesst die Achse AL des Gleitlagers GL mit der Achse AS der Schmiernut, d.h. der Hauptnut HN und der Übergangsnut UN, einen Winkel α ein. Dieser Winkel α wird durchwegs kleiner als 45° - bevorzugterweise gleich 30° - gewählt. Dabei, wie auch aus Fig. 1 ersichtlich, ist die Schmiernutneigung gegenüber der Gleitlagerachse AL derart gerichtet, dass die Schmiernut in Drehrichtung der Welle gesehen zahnradseitig ZS eher beginnt als dichtungsseitig DS.

Die Nuttiefen der Hauptschmiernut HN und der Übergangsnut UN können sowohl standardmässig für Fluidklassen, wie beispielsweise Polyolefine, als auch individuell ausgeführt werden. Bevorzugt wird eine gegenüber dem Eintrittsquerschnitt deutlich verringerte Austrittsquerschnittsfläche, um die Gleitlagerleckage gering zu halten. Denkbar ist auch, dass aufgrund des zu fördernden Fluids die Schmiernut oder zumindest ein Teil davon, d.h. die Hauptnut HN und/oder die Übergangsnut UN, im Gleitlager GL enden, d.h., dass die Schmiernut nicht vollständig von der Zahnseite ZS zur Dichtungsseite DS läuft.

Für eine präzise Erläuterung der bevorzugten Ausführungsform der vorliegenden Erfindung wurde die Schmiernut in eine Hauptnut HN und eine Übergangsnut UN aufgeteilt. Tatsächlich handelt es sich allerdings um eine einzige Nut, die bevorzugterweise derart ausgebildet ist, dass deren Eintrittskante in den Schlitz zwischen Gleitlager und Welle in Bezug zur Wellendrehrichtung flach ausgebildet ist.

In Fig. 2 ist ein Querschnitt durch das erfindungsgemässe Gleitlager GL dargestellt, wobei die in einen zylinderförmigen Mantel Z des Gleitlagers GL eingeformten Haupt- und Übergangsnut HN bzw. UN deutlich erkennbar sind. Bei dieser dargestellten Ausführungsform der Erfindung sind die Hauptnut HN und die Übergangsnut UN kreiszylinderförmig ausgebildet, womit ein einfaches Anbringen der Schmiernut im Gleitlager GL ermöglich wird. Die erwähnte flache Ausgestaltung der Schmiernut wird bei der in Fig. 2 dargestellten Ausführungsform beispielsweise dadurch erreicht, dass eine Nuttangente TUN an die Übergangsnut UN in einem Eckpunkt E zwischen Übergangsnut UN und Zylindermantel Z mit einer Bohrungstangente TZ an den Zylindermantel Z im besagten Eckpunkt E einen Winkel β einschliesst, der kleiner als 30°, bevorzugterweise kleiner als 15° ist. Diese Winkelangaben beziehen sich auf einen Schnitt durch das zahnradseitige ZS Lagerende des Gleitlagers GL, weshalb die Winkelgrösse für den Winkel β, insbesondere bei abnehmender Querschnittsfläche der Schmiernut in Richtung Dichtungsseite DS, über die Gleitlagerbreite zur Dichtungsseite DS hin ebenfalls kleiner wird.

## Patentansprüche

1. Gleitlager (GL) für eine Zahnradpumpe, die ein Zahnrad und eine Dichtung aufweist, mit einer Schmiernut (HN, UN), **dadurch gekennzeichnet, dass** eine Querschnittfläche der Schmiernut (HN, UN) auf der zahnradseitig einbaubaren Seite am grössten ist und dass die Querschnittfläche, ausgehend von der zahnradseitig einbaubaren Seite, in Richtung dichtungsseitig einbaubaren Seite, zumindest bis zum Ende der Schmiernut (HN, UN) oder bis zum Ende des Gleitlagers (GL), stetig abnimmt.

2. Gleitlager (GL) nach Anspruch 1, **dadurch gekennzeichnet, dass** die Schmiernut (HN, UN) im Wesentlichen nichtlastseitig vorgesehen ist.

3. Gleitlager (GL) nach Anspruch 1 oder 2, **dadurch gekennzeichnet, dass** die Schmiernut (HN, UN) von der Zahnradseite (ZS) bis zur Dichtungsseite (DS) führt.

4. Gleitlager (GL) nach einem der Ansprüche 1 bis 3, **dadurch gekennzeichnet, dass** die Schmiernut (HN, UN) zahnradseitig (ZS) in Drehrichtung (DR) gesehen eher beginnt als dichtungsseitig (DS).

5. Gleitlager (GL) nach einem der Ansprüche 1 bis 4, **dadurch gekennzeichnet, dass** ein zwischen einer Gleitlagerachse (AL) und einer Schmiernutachse (AS) liegender Winkel (α) kleiner als 45°, vorzugsweise gleich 30° ist.

6. Gleitlager (GL) nach einem der Ansprüche 1 bis 5, **dadurch gekennzeichnet, dass** die Schmiernut (HN, UN) im Bereich jener Kante, die in Bezug auf eine Wellendrehrichtung als Eintrittskante für Schmiermedium in den Schlitz zwischen Gleitlager (GL) und Welle wirkt, flach auslaufend ausgebildet ist.

7. Gleitlager (GL) nach Anspruch 6, **dadurch gekennzeichnet, dass** die Schmiernut aus einer Hauptnut (HN) und einer Übergangsnut (UN) besteht, wobei die Übergangsnut (UN) den flach ausgebildeten Bereich bei der Eintrittskante bildet.

8. Gleitlager (GL) nach Anspruch 7, **dadurch gekennzeichnet, dass** die Übergangsnut (UN) und die Hauptnut (HN) kreiszylinderförmig ausgebildet sind und dass eine Nuttangente (TUN) an die Übergangsnut (UN) in einem Eckpunkt (E) zwischen Übergangsnut (UN) und Zylindermantel (Z) der Gleitlagerbohrung mit einer Bohrungstangente (TZ) an den Zylindermantel (Z) im Eckpunkt (E) einen Winkel β einschliesst, der zumindest zahnradseitig kleiner als 30°, bevorzugterweise kleiner als 15° ist.

9. Gleitlager (GL) nach Anspruch 7 oder 8, **dadurch gekennzeichnet, dass** der Winkel β über die Lagerbreite von der Zahnradseite (ZS) zur Dichtungsseite (DS) hin abnimmt.

10. Zahnradpumpe mit einem Gleitlager (GL) nach einem der Ansprüche 1 bis 9 zur Förderung von hochviskos fliessenden Fluiden, insbesondere von cellulosehaltigen Flüssigkeiten.

## Claims

1. Slide bearing (GL) for a gear pump which has a gear wheel and a seal, with a lubricating groove (HN, UN), **characterized in that** a cross-section area of the lubricating groove (HN, UN) is greatest possible on the side which can be fitted on the gear wheel side and that the cross-section area, starting on the side which can be fitted on the gear wheel side towards the side which can be fitted on the seal side, decreases steadily at least to the end of the lubricating groove (HN, UN) or to the end of the slide bearing (GL).

2. Slide bearing (GL) according to claim 1, **characterized in that** the lubricating groove (HN, UN) is essentially provided on the non-load side.

3. Slide bearing (GL) according to claim 1 or 2, **characterized in that** the lubricating groove (HN, UN) leads from the gear wheel side (ZS) to the seal side (DS).

4. Slide bearing (GL) according to one of the claims 1 to 3, **characterized in that** the lubricating groove (HN, UN) begins earlier on the gear wheel side (ZS) than on the seal side (DS) viewed in the direction of rotation (DR).

5. Slide bearing (GL) according to one of the claims 1 to 4, **characterized in that** an angle (α) lying between a slide bearing axis (AL) and a lubricating groove axis (AS) is less than 45°, preferably equal to 30°.

6. Slide bearing (GL) according to one of the claims 1 to 5, **characterized in that** the lubricating groove (HN, UN) is designed with a flat run-out in the area of the edge which, in relation to the shaft rotation direction, acts as the inlet edge for the lubricant into the slot between the slide bearing (GL) and the shaft.

7. Slide bearing (GL) according to claim 6, **characterized in that** the lubricating groove consists of a main groove (HN) and a transitional groove (UN), whereas the transitional groove (UN) is arranged in the area of the inlet edge designed with a flat run-out.

8. Slide bearing (GL) according to claim 7, **characterized in that** the transitional groove (UN) and the main groove (HN) are formed circular cylindrical and that a groove tangent (TUN) at the transitional groove (UN), at a corner point (E) between the transitional groove (UN) and the cylinder casing (Z) of the slide bearing bore, encloses with a bore tangent (TZ) to the cylinder casing (Z) at the corner point (E) an angle β which at least on the gear wheel side is less than 30°, preferably less than 15°.

9. Side bearing (GL) according to claim 7 or 8, **characterized in that** the angle β diminishes over the bearing width from the gear wheel side (ZS) to the seal side (DS).

10. Gear pump with a slide bearing (GL) according to any of the claims 1 to 9 to transport highly viscose liquids, in particular cellulose containing liquids.

## Revendications

1. Palier lisse (GL) pour une pompe à engrenages ayant une roue d'engrenages et un joint d'étanchéité, avec une rainure de lubrification (HN, UN), **caractérisé en ce que** l'aire d'une section de la rainure de lubrification (HN, UN) du côté qui peut être installé côté roue d'engrenages est de grandeur maximum et **en ce que** l'aire de la section, partant du côté qui peut être installé côté roue d'engrenages en direction du côté qui peut être installé côté joint d'étanchéité, diminue continuellement au moins jusqu'à l'extrémité de la rainure de lubrification (HN, UN) ou jusqu'à l'extrémité du palier lisse (GL).

2. Palier lisse (GL) selon la revendication 1, **caractérisé en ce que** la rainure de lubrification (HN, UN) est essentiellement prévue du côté non porteur.

3. Palier lisse (GL) selon la revendication 1 ou 2, **caractérisé en ce que** la rainure de lubrification (HN, UN) mène du côté engrenages (ZS) au côté joint d'étanchéité (DS).

4. Palier lisse (GL) selon l'une des revendications 1 à 3, **caractérisé en ce que** la rainure de lubrification (HN, UN) commence plus tôt du côté roue d'engrenages (ZS) que du côté joint d'étanchéité (DS) telle qu'elle est vue dans le sens de la rotation (DR).

5. Palier lisse (GL) selon l'une des revendications 1 à 4, **caractérisé en ce qu'**un angle (α) situé entre l'axe du palier lisse (AL) et l'axe de la rainure de lubrification (AS) est inférieur à 45°, de préférence égal à 30°.

6. Palier lisse selon l'une des revendications 1 à 5, **caractérisé en ce que** la rainure de lubrification (HN, UN) dans la zone de l'arête, qui vue dans un sens de la rotation de l'arbre a la fonction de l'arête d'entrée pour le lubrifiant dans la fente entre le palier lisse (GL) et l'arbre, se termine en forme plate.

7. Palier lisse (GL) selon la revendication 6, **caractérisé en ce que** la rainure de lubrification est constituée d'une rainure principale (HN)et d'une rainure de transition (UN), où la rainure de transition (UN) forme la zone plate au niveau de l'arête d'entrée.

8. Palier lisse (GL) selon la revendication 7, **caractérisé en ce que** la rainure de transition (UN) et la rainure principale (HN) sont formées de manière cylindrique circulaire et **en ce qu'**une tangente (TUN) à la rainure de transition (UN), en un point angulaire (E) entre la rainure de transition (UN) et l'enveloppe cylindrique (Z) de l'alésage du palier lisse, renferme avec une tangente (TZ) à l'enveloppe cylindrique (Z) au point angulaire (E) un angle (β) qui au moins du côté roue d'engrenages est inférieur à 30°, de préférence inférieur à 15°.

9. Palier lisse (GL) selon la revendication 7 ou 8, **caractérisé en ce que** l'angle (β) diminue sur la largeur du palier du côté roue d'engrenages (ZS) vers le côté joint d'étanchéité (DS).

10. Pompe à engrenages avec un palier lisse (GL) selon l'une des revendications 1 à 9 pour transporter des liquides hautement visqueux, en particulier des liquides cellulosiques.
